# EUROPEAN PATENT SPECIFICATION

(11) **EP 3 790 402 B1**
(45) Date of publication and mention of the grant of the patent: **20.12.2023**
(21) Application number: 19724387.6
(22) Date of filing: 08.05.2019
(51) Int. Cl.: A23G 1/30, A23G 1/36, A23G 9/32, A23G 9/48

(54) **COMPOSITION FOR COATING FROZEN CONFECTIONERY AND A PROCESS FOR MANUFACTURING SAME**
ZUSAMMENSETZUNG ZUR BESCHICHTUNG VON GEFRORENEN SÜSSWAREN UND VERFAHREN ZUR HERSTELLUNG DAVON
COMPOSITION POUR L'ENROBAGE DE CONFISERIE GLACÉE ET SON PROCÉDÉ DE FABRICATION

(30) Priority: 09.05.2018 US 201862669114 P
(43) Date of publication of application: 17.03.2021
(73) Proprietor: Société des Produits Nestlé S.A., 1800 Vevey (CH)
(72) Inventor: AEBI, Marcel, Bakersfield, CA 93311 (US); OPET, Nathan, Gove City, OH 43124 (US); CHANDRASEKARAN, Shantha,Nalur, Bakersfield, California 93311 (US)
(74) Representative: Slaven, John William
(86) International application number: PCT/EP2019/061861
(87) International publication number: WO 2019/215251

(56) References cited:
- WO-A1-2017/055519
- WO-A1-2017/055520
- WO-A1-2017/207686
- US-A1- 2008 131 564

## Description

### Field of the invention

The present invention relates to a composition for coating a frozen confection, in particular to a composition for a ganache type coating. The invention also relates to a method for making the coating composition.

### Background

Coated frozen confections are products, which are highly appreciated by consumers. Texture and nutritional profile of the coating are drivers for consumer preference.

Ganache coatings are well known in confectionery industry due to the soft and creamy texture. Applying the ganache coating to frozen confection raises a number of difficulties due to the soft products surface. For example, solidification of the coating has required a long setting time. Furthermore, packing the product without influencing coating appearance has been difficult.

US2003175385 discloses a packaged frozen product, comprising (a) an edible frozen matrix, and (b) a fat based ganache coating comprising 1) a compound coating, 2) an edible oil, and 3) water that is applied to at least one surface of said edible frozen matrix. The fat based ganache coating has a penetration hardness at -5°C of from about 4,400 to about 12,000 grams of force. The coating described in US2003175385 provides a snapping sound and its surface cracks when cut with an utensil. The coating is said to prevent crystal formation in the ice cream, which can then be made without stabilizers.

Soft coatings comprising water emulsions are known.

EP1040760 discloses a water-containing soft creamy composition for coating or enrobing ice confectionery products which is prepared by forming an emulsion of cream and milk solids with a vegetable oil and butter fat and an emulsifier system and mixing melted chocolate into the emulsion. The composition may be used to form a layer or inclusion in an ice confectionery product. The inclusion of water requires the use of an emulsifier system, which may not be desirable. Furthermore, water-containing emulsions have shorter shelf-life and are prone to separation and are preferably blended at the point of use.

WO2017/055520 discloses a low SFA coating for a frozen composition, while maintaining snap properties.

There is a need for a coating with soft sensation and texture similar to a ganache. A ganache type coating is soft, without snappy or crisp texture. Furthermore, the coating needs to be usable on standard coating /dipping equipment used in industrial ice cream production.

There is a need to overcome at least some of the aforementioned problems whilst providing frozen confectionery coatings with desirable rheological properties in form of the drying and setting properties whilst maintaining desired organoleptic properties of a ganache coating.

### Object of the invention

It is thus the object of present invention to provide a ganache type coating for frozen confectionery products, in particular with a soft texture. Current products have coatings that are brittle and set under normal manufacturing conditions; or soft but do not set under normal manufacturing conditions.

A second object of the present invention is to provide a coating composition for frozen confectionery with acceptable processing characteristics.

### Summary of the invention

The present invention is defined by the claims. According to a first aspect the invention relates to a composition for coating a frozen confection, the composition comprising, expressed in weight % (based on the total weight of the coating),
50 to 60 wt% of non-fat solids,
40 to 50 wt% of fat, which comprises a fat blend of a hardening fat and a liquid oil,
wherein the fat blend consists of 45 to 55 wt % of the liquid oil and 55 to 45 wt % of the hardening fat, and wherein
the hardening fat comprises at least 8 % anhydrous milk fat, and wherein the composition is free from water.

The present invention avoids the problems associated with water containing emulsions and provides a pure fat based coating, which can be pre-manufactured and stored for use as needed.

It has been found that the coating is solid at frozen state and distribution but during consumption it is soft.

The coating obtained with the composition according to the invention has a soft sensation and texture similar to a ganache. In comparison to standard compound coatings used in frozen desserts with a snappy and crisp texture the present invention of a ganache type coating which was found to be significantly soft and chewy by a sensory panel.

### Brief description of the drawings

Figure 1 shows the solid fat content (%) for temperatures between -40°C-4°C ( -40°F and 40°F ) for fat blends according the invention compared with other coating fats.
Figure 2 shows the puncture force of fat blends at 5°C comparing hardness and fracturing.
Figure 3 shows the setting characteristics of fat blends applied to coatings. (A) is a soft, but non-setting and (B) is a Ganache type according to the invention.

### Detailed description of the invention

Normally a coating formulated to be soft (such as a coating with soybean oil) would be too soft and would not set quickly enough in standard industrial filling / dipping line resulting in smear and uneven! drip covering of the surface. Further, the coating composition may not adhere sufficiently to the surface of the frozen product. Typically, the blend of oils used in a conventional coating is formulated to achieve a solid fat index of ~70 at 0°C, to be a good coating, and this coating will be hard and brittle and will not have the needed soft texture.

The present invention provides a coating composition which comprises a fat blend with low to mid fraction of vegetable fat (palm), with high content of liquid oil, preferably canola (rape seed) oil. Additionally, the blend comprises milk fat which due to its wide range of melting fractions to provide textural benefit. Preferably, a seeding or structuring agent is used to aid the crystallization of the material. It is added in an amount sufficient to provide strength and faster crystallization kinetic properties to the coating. Examples of seeding or structuring agents are palm stearine or wax. Anhydrous milk fat brings a wider range of melting points and adds to the texture of the coating. Cocoa powder added to the mix may aid the setting of the coating composition.

If a structuring agent is used it is preferably present in an amount of between about 0.2% and 3% by weight of the coating.

The waxes may be waxes such as bees wax, berry wax, carnauba wax and a plant derived wax such as candelilla wax, berry wax and sunflower wax, or a combination thereof.

Other structuring agents are monoacylglycerol, diacylglycerol, monoacylglycerol ester, sorbitan fatty acid ester, behenic acid, or a combination thereof. These structuring agents are however, not preferred for all natural products.

It is preferred that the coating material is maintained at 32.22-43.33°C ( 90 -110 °F) to retain the optimal viscosity for regulating the pick-up weight and to enable a uniform and smooth coating on the finished product. The coating according to the invention typically sets and solidifies in approximately 30 seconds.

The ganache type coating composition according to the invention comprises 40 to 50 wt% of fat. This range of fat content is preferred, as it contributes to achieve appropriate viscosity and preferred thickness of coating in frozen confections, e.g. 0.4 to 1.2 mm.

The fat according to the invention comprises a fat blend consisting of 45 to 55 wt % of a liquid oil and 55 to 45 wt % of a hardening fat, and wherein the hardening fat comprises at least 8 % anhydrous milk fat, preferably 8 to 22% milk fat. In a preferred embodiment of the invention the fat blend comprises 45 to 55 wt% of the liquid oil and 55 to 45 wt% of the hardening fat.

The coating composition according to the invention comprises 50 to 60 wt% of non-fat solids. The non-fat solids are preferably selected from the group consisting of: sugar, fibres, cocoa powder, milk powder, emulsifier, nutmeat and one or more flavours. The non-fat solids provide structure, flavour and colour to the coating.

In a preferred embodiment of the invention, the composition comprises 35 to 66 wt % non-fat solids and 42 to 44 wt% of fat.

In the present context, the fat phase includes the fat in cocoa powder or paste, and milk powders. The fat in these components is calculated into the amounts of fat in the composition.

In the present context, ganache is a term that describes a rich and creamy topping made with chocolate and heavy cream. It can be used in the centres of truffles, as a glaze over cake, or it can be whipped for use as a filling and/or frosting. Traditionally, a ganache is made by heating cream and adding bits of chocolate. The mixture is then stirred until it becomes smooth.

The frozen confection may be a portion, dome, bonbon, morsel, bar, stick or bar. It can be extruded or molded. The frozen confection may be provided with a stick for holding the product.

In a preferred embodiment of the invention, the hardening fat in addition to the milk fat comprises fat selected from the group consisting of: palm oil mid fractions, palm oil soft fractions or a combination thereof.

It a preferred embodiment of the invention the liquid oil is selected from the group consisting of: rapeseed oil, sunflower oil, safflower oil, soybean oil, algal oil, palm oil, peanut oil, olive oil, macadamia nut oil, moringa oleifera, seed oil, hazelnut oil, avocado oil or a combination thereof. It is particular preferred that liquid oil is not high oleic oil.

In a preferred embodiment of the invention, wherein the coating composition has a solid fat content of 30 - 50 % at 0°C. To keep a soft texture while still being able to set fast a solid fat content at 0°C of between 30-50% is preferred. Above 50% the coating becomes brittle and snaps or cracks. Below 30% the coating does not set.

It is furthermore preferred that the composition comprises less than 3 wt. % lauric fat, preferably less than 2 wt. %, most preferably the composition is free of lauric fat. This provides a soft texture. It has been found that above 3 wt. % lauric fat the coating becomes brittle and gets a snap which is undesirable for the present invention.

In a preferred embodiment of the invention, the coating composition comprises 25 to 45 wt. % sugar, preferably 30 to 40 wt. % sugar, 0 to 15 wt. % cocoa powder, preferably 5 to 10 wt. % cocoa powder, and 0 to 15 wt. % non-fat milk solids, preferably 5 to 10 wt.% non-fat milk solids.

In a preferred embodiment of the invention, the coating composition comprises 1 to 20 wt. % non-fat milk solids.

For chocolate flavoured coating the amounts of non-fat cocoa solids in the coating composition is from 5 to 10 wt. %. For milk chocolate flavoured coating it is preferred that the amount of non-fat milk solids 5 to 10 wt. %. To obtain other coatings no cocoa powder might be included at all.

A preferred plastic viscosity of the coating composition has been found to be 100 to 455 centipoise (cps) (mPas). Below this value, the coating will be too thin, with a lower pick-up weight. With a thin coating, there would be a loss of desirable textural attributes.

Above the indicted plastics viscosity range "pin holes" or uneven coating or lack of coating are likely to occur on the products to be coated.

The melting point of the coating has been found to be important for the coating to set well and however at the same time it should not be too waxy when consumed. It is preferred that the coating composition has a melting point of 32 to 36 °C. Below that temperature, it will not set and have run down issues and with oily mouthfeel of the coating and above that temperature, it will have a waxy sensorial properties. Waxy texture occurs when melting point is above 36°C.

The fat-based coating composition may comprise 0.1 to 2 wt.% of emulsifiers. Preferably, the emulsifiers are selected from the group consisting of sunflower lecithin and soy lecithin or a combination thereof.

Emulsifier can be used to further regulate the rheology of the coating. If so, preferred emulsifiers are soy lecithin and/or sunflower lecithin/canola lecithin, as they are perceived as cleaner label.

PGPR can be used to impacts yield value, and will affect thickness if so desired. PGPR is not used in some instances because it is not perceived as clean label.

The fat blend used in the composition according to the invention has a saturated fat level of below 40%, which equates 16-22% SFA in the coating.

The invention also relates to a process for producing a coating composition according to the invention. Embodiment of the coating compositions are described above. The process comprises the steps:
providing the non-fat solids, the hardening fat and the liquid oil,
melting the hardening fat,
mixing non-fat solids with the at least part of the melted hardening fat and obtaining a mixture of hardening fat and non-fat solids,
refining the mixture of hardening fat and non-fat solids by milling to reduce the particle, preferably to a particle size to below 40 microns,
adding the liquid oil to the refined mixture and
optionally adding emulsifier to the refined mixture and/or the mixture with the liquid oil.

In an alternative process of the invention the non-fat solids can be pre-milled in a separate process-step (e.g. by the use of air-classifier mills). The pre-milling step can then fully or partly replace the refining of the mixture of fat and non-fat solids by milling to reduce the particle.

In the present context particle, size may be determined using the Malvern particle sizer, with medium chain triglyceride oil as the dispersant. Particle size is analyzed at fraction less than 10 %, 50 %, 90 % and are calculated with the Malvern software based on the Mie theory. In the context of this application, the particle sizes are values at 90%. Equipment that may be used is a Chocolate Particle Size Analyzer, Malvern Mastersizer Micro with size range: 0.3 µm to 300 µm.

The invention also relates to a frozen confection with at least partly coated frozen confection with a composition to the invention. Preferably, the frozen confection according to the present invention may have a coating thickness from 0.4 to 1.2 mm.

The invention also relates to a method for producing a frozen confection, the method comprising providing a coating composition as described in this patent application and applying the method of preparation according to the invention described herein.

### Examples

### Example 1

### Sample Preparation:

Coating samples have been made by mixing the dry ingredients, the oils and emulsifiers (Lecithin only) to obtain 1.8 kg batch. After mixing, the composition is ground in a mill (Royal Duyvis Wiener I-W-S; 8mm steel balls) at 45°C, for 18 minutes. When grinding is over, flavoring agent were added to the composition and the mixture stirred at 150 rpm for 30 minutes.

The two examples of ganache types are the only examples containing the anhydrous milk fat and therefore, the only examples according to the present invention.

| Soft Coating Dark - Non setting | |
|---|---|
| | % |
| Sugar | 41.000 |
| Soya Bean Oil | 37.250 |
| Vegetable Fat Palm (Stearin) | 1.350 |
| Cocoa Powder | 20.000 |
| Lecithin | 0.400 |

| Soft Coating Milk - Non Setting | |
|---|---|
| | % |
| Sugar | 41.360 |
| Soya Bean Oil | 37.500 |
| Vegetable Fat Palm (Stearin) | 1.500 |
| Cocoa Powder | 11.500 |
| Whole Milk Powder | 7.500 |
| Lecithin | 0.500 |
| Vanillin | 0.040 |
| Natural Flavor | 0.100 |

| Soft Coating Dark setting (ganache type) | |
|---|---|
| | % |
| Sugar | 36.750 |
| Palm Oil | 16.600 |
| Canola Oil | 20.000 |
| Anhydrous Milk Fat | 4.000 |
| Cocoa Powder | 22.150 |
| Lecithin | 0.500 |

| Soft Coating Milk setting (ganache type) | |
|---|---|
| | % |
| Sugar | 36.750 |
| Palm Oil midfraction | 13.200 |
| Canola Oil | 22.000 |
| Anhydrous Milk Fat | 8.800 |
| Skim Milk Powder | 7.000 |
| Cocoa Powder | 11.750 |
| Lecithin | 0.500 |

| Hard Coating Dark Brittle | |
|---|---|
| | % |
| Sugar | 31.000 |
| Coconut Oil | 50.000 |
| Canola Oil | 7.500 |
| Cocoa Powder | 11.000 |
| Lecithin | 0.500 |

| Hard Coating Milk Brittle | |
|---|---|
| | % |
| Sugar | 31.000 |
| Coconut Oil | 30.000 |
| Palm Olein | 4.200 |
| Skim Milk Powder | 10.800 |
| Cocoa Liquor | 23.500 |
| Lecithin | 0.500 |

### Example 2

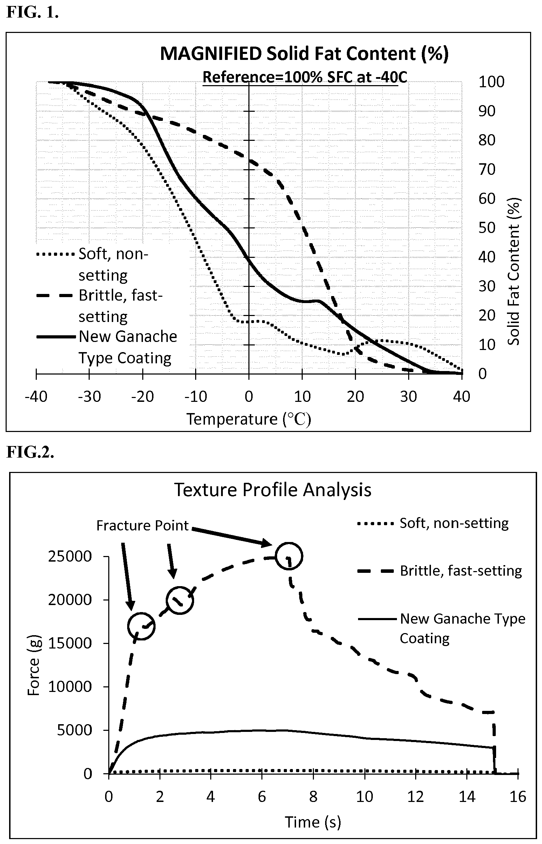

Example 2 uses the coatings of Example 1. In Figure 1 the solid fat content (%) for temperatures between -40°C-4°C (-40°F and 40°F) of the coatings is shown.

The fat blend of the coating composition of the present invention sets quickly in the -17.7°C to -12.2°C range (0-10°F range) where as other coatings slower and at a lower temperature range.

For Figure 1, shows the solid fat was determined by melting in cooling curves using DSC with the following thermos cycling: Equilibrate 20.00 °C; Data On ; Ramp 10 °C/min to 60.00 °C; Isothermal 5.0 min; Ramp 10 °C/min to -40.00 °C; Isothermal 5.0 min; Ramp 10 °C/min to 60.00 °C; Mark End of Cycle

### Example 3

Example 3 uses the coatings of Example 1.

The hardness was measured using a TA.XT.plus texture profile analyzer (Stable Micro Systems, UK). 25g blocks of compound coating were subject to a single penetration test was conducted on the texture profile analyzer with a 5mm diameter stainless steel probe from a distance of 15mm at 1 mm/s. The trigger force was set to 10 g.

The results are shown in Figure 2.

### Example 4

Coatings prepared in Example 1 were tested to demonstrate the ability of the coatings to perform on the manufacturing line.

To keep a soft texture while still being able to set fast a solid fat content at 0°C of between 30-50% has been found to be needed. Above 50% the coating becomes brittle and snaps or cracks. Below 30% the coating does not set.

| | Soft, non-setting | Ganache type (the present invention) | Brittle, fastsetting |
|---|---|---|---|
| Pick-up Weight (g) | 28.6 | 28.1 | 25.1 |
| Drip Time(s) | 30 | 15.6 | 12 |
| Set Time(s) | 90+ | 30 | 25 |

Uncoated bars with a surface temperature of -25°C were dipped into coatings held at 45°C. Drip time is defined as point until final drop of excess coating fell off the bar. Set time is defined as time until the coating is dry to the touch.

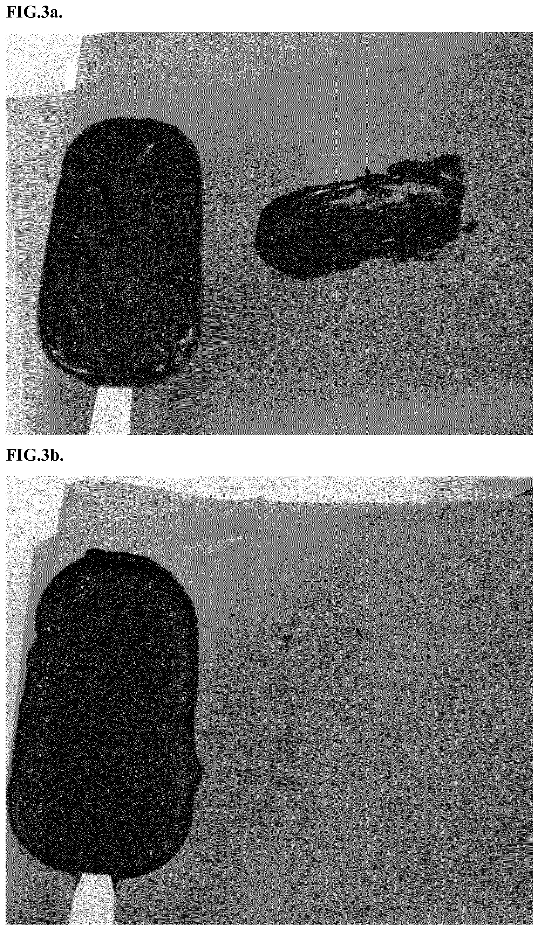

Figure 3 shows the setting characteristics of fat blends applied to coatings. (A) is a soft, but non-setting and (B) is a Ganache type according to the invention.

## Claims

1. A composition for coating a frozen confection, the composition comprising, expressed in weight % (based on the total weight of the coating),
50 to 60 wt% of non-fat solids,
40 to 50 wt% of fat, which comprises a fat blend of a hardening fat and a liquid oil, wherein the fat blend consists of
45 to 55 wt % of the liquid oil
and 55 to 45 wt % of the hardening fat, and wherein the hardening fat comprises at least 8 % anhydrous milk fat,
and wherein the composition is free from water.

2. A composition according to claim 1, wherein the composition has a plastic viscosity of 100 to 455 centipoise (cps) (mPas).

3. A composition according to any of the preceding claims, wherein the coating composition has a solid fat content of 30 - 50 % at 0°C.

4. A composition according to any of the preceding claims, wherein the structuring agent is present in an amount of between about 0.2% and 3% by weight of the coating.

5. A composition according to any of the preceding claims, wherein the hardening fat in addition to the milk fat comprises fat selected from the group consisting of: palm oil mid fractions, palm oil soft fractions or a combination thereof.

6. A composition according to any of the preceding claims, wherein the liquid oil is selected from the group consisting of: rapeseed oil, sunflower oil, safflower oil, soybean oil, algal oil, palm oil, peanut oil, olive oil, macadamia nut oil, moringa oleifera, seed oil, hazelnut oil, avocado oil or a combination thereof, preferably the liquid oil is not high oleic oil.

7. A composition according to any of the preceding claims, wherein the non-fat solids are selected from the group consisting of: sugar, fibres, cocoa powder, milk powder, emulsifier, nutmeat and one or more flavors.

8. A composition according to any of the preceding claims, wherein the composition comprises 0.1 to 2 wt.% of emulsifiers selected from sunflower lecithin and soy lecithin or a combination thereof.

9. A composition according to any of the preceding claim comprising 1 to 20 wt. % non-fat milk solids.

10. A composition according to any of the preceding claims, wherein the non-fat solids comprises
25 to 45 wt. % sugar,
0 to 15 wt. % cocoa powder, and
0 to 12 wt. % of non-fat milk solids.

11. A composition according to any of the preceding claims, wherein the composition comprises the structuring agent selected from the group consisting of palm stearin, wax or a combination thereof.

12. A composition according to any of the preceding claims, wherein the composition comprises less than 3 wt. % lauric fat, preferably less than 2 wt. %, most preferably the composition is free of lauric fat.

13. A process for producing a coating composition according to any of the preceding claims, wherein said process comprising the steps:
providing the non-fat solids, the hardening fat and the liquid oil,
melting the hardening fat,
mixing non-fat solids with the at least part of the melted hardening fat and
obtaining a mixture of hardening fat and non-fat solids,
refining the mixture of hardening fat and non-fat solids by milling to reduce the particle, preferably to a particle size to below 40 microns,
adding the liquid oil to the refined mixture and
optionally adding emulsifier to the refined mixture and/or the mixture with the liquid oil.

14. A process for producing an at least partly coated frozen confection, the process comprising providing a coating composition according to any of the preceding claims and coating a frozen composition.

15. A frozen confection at least partly coated with a composition according to any of claims 1 to 12.

## Patentansprüche

1. Zusammensetzung zum Beschichten eines gefrorenen Konfekts, die Zusammensetzung umfassend,
ausgedrückt in Gew.-% (bezogen auf das Gesamtgewicht der Beschichtung),
zu 50 bis 60 Gew.-% fettfreie Feststoffe,
zu 40 bis 50 Gew.-% Fett, das eine Fettmischung aus einem Härtungsfett und einem flüssigen Öl umfasst, wobei die Fettmischung aus
45 bis 55 Gew.-% des flüssigen Öls und 55 bis 45 Gew.-% des Härtungsfetts besteht, und wobei das Härtungsfett mindestens 8 % wasserfreies Milchfett umfasst,
und wobei die Zusammensetzung frei von Wasser ist.

2. Zusammensetzung nach Anspruch 1, wobei die Zusammensetzung eine Kunststoffviskosität von 100 bis 455 Centipoise (cps) (mPas) aufweist.

3. Zusammensetzung nach einem der vorstehenden Ansprüche, wobei die Beschichtungszusammensetzung einen Festfettgehalt von 30 bis 50 % bei 0 °C aufweist.

4. Zusammensetzung nach einem der vorstehenden Ansprüche, wobei der Strukturbildner in einer Menge zwischen ungefähr 0,2 Gew.-% und 3 Gew.-% der Beschichtung vorhanden ist.

5. Zusammensetzung nach einem der vorstehenden Ansprüche, wobei das Härtungsfett zusätzlich zu dem Milchfett Fett umfasst, das aus der Gruppe ausgewählt ist, bestehend aus: Palmölmittelfraktionen, Palmölweichfraktionen oder einer Kombination davon.

6. Zusammensetzung nach einem der vorstehenden Ansprüche, wobei das flüssige Öl aus der Gruppe ausgewählt ist, bestehend aus: Rapsöl, Sonnenblumenöl, Distelöl, Sojaöl, Algenöl, Palmöl, Erdnussöl, Olivenöl, Macadamianussöl, Moringa oleifera, Samenöl, Haselnussöl, Avocadoöl oder einer Kombination davon, vorzugsweise das flüssige Öl kein Öl mit hohem Ölsäuregehalt ist.

7. Zusammensetzung nach einem der vorstehenden Ansprüche, wobei die fettfreien Feststoffe aus der Gruppe ausgewählt sind, bestehend aus: Zucker, Fasern, Kakaopulver, Milchpulver, Emulgator, Nusskern und einem oder mehreren Aromen.

8. Zusammensetzung nach einem der vorstehenden Ansprüche, wobei die Zusammensetzung zu 0,1 bis 2 Gew.-% Emulgatoren umfasst, die aus Sonnenblumenlecithin und Sojalecithin oder einer Kombination davon ausgewählt sind.

9. Zusammensetzung nach einem der vorstehenden Ansprüche, umfassend zu 1 bis 20 Gew.-% fettfreie Milchfeststoffe.

10. Zusammensetzung nach einem der vorstehenden Ansprüche, wobei die fettfreien Feststoffe umfassen
zu 25 bis 45 Gew.-% Zucker,
zu 0 bis 15 Gew.-% Kakaopulver und
zu 0 bis 12 Gew.-% fettfreie Milchfeststoffe.

11. Zusammensetzung nach einem der vorstehenden Ansprüche, wobei die Zusammensetzung das Strukturierungsmittel umfasst, das aus der Gruppe ausgewählt ist, bestehend aus Palmstearin, Wachs oder einer Kombination davon.

12. Zusammensetzung nach einem der vorstehenden Ansprüche, wobei die Zusammensetzung weniger als 3 Gew.-% Laurinfett, vorzugsweise weniger als 2 Gew.-% umfasst, am meisten bevorzugt die Zusammensetzung frei von Laurinfett ist.

13. Verfahren zum Herstellen einer Beschichtungszusammensetzung nach einem der vorstehenden Ansprüche, wobei das Verfahren die Schritte umfasst:
Bereitstellen der fettfreien Feststoffe, des Härtungsfetts und des flüssigen Öls,
Schmelzen des Härtungsfetts,
Mischen von fettfreien Feststoffen mit dem mindestens Teil des geschmolzenen Härtungsfetts und
Erhalten einer Mischung aus Härtungsfett und fettfreien Feststoffen,
Verfeinern der Mischung aus Härtungsfett und fettfreien Feststoffen durch Mahlen, um die Teilchen zu verkleinern, vorzugsweise auf eine Teilchengröße von unter 40 Mikrometer,
Zugeben des flüssigen Öls zu der verfeinerten Mischung und
optional Zugeben von Emulgator zu der verfeinerten Mischung und/oder der Mischung mit dem flüssigen Öl.

14. Verfahren zum Herstellen eines mindestens teilweise beschichteten gefrorenen Konfekts, das Verfahren umfassend das Bereitstellen einer Beschichtungszusammensetzung nach einem der vorstehenden Ansprüche und das Beschichten einer gefrorenen Zusammensetzung.

15. Gefrorenes Konfekt, das mindestens teilweise mit einer Zusammensetzung nach einem der Ansprüche 1 bis 12 beschichtet ist.

## Revendications

1. Composition pour l'enrobage d'une confiserie congelée, la composition comprenant,
exprimé en % en poids (sur la base du poids total de l'enrobage),
50 à 60 % en poids de matières solides non grasses,
de 40 à 50 % en poids de matière grasse, qui comprend un mélange de matières grasses d'une matière grasse de durcissement et d'une huile liquide, dans laquelle le mélange de matières grasses est constitué de
45 à 55 % en poids de l'huile liquide et de 55 à 45 % en poids de la matière grasse de durcissement, et dans laquelle la matière grasse de durcissement comprend au moins 8 % de matière grasse de lait anhydre,
et dans laquelle la composition est exempte d'eau.

2. Composition selon la revendication 1, dans laquelle la composition a une viscosité plastique de 100 à 455 centipoises (cP) (mPas).

3. Composition selon l'une quelconque des revendications précédentes, dans laquelle la composition d'enrobage a une teneur en matières grasses solides de 30 à 50 % à 0 °C.

4. Composition selon l'une quelconque des revendications précédentes, dans laquelle l'agent structurant est présent en une quantité comprise entre environ 0,2 % et 3 % en poids de l'enrobage.

5. Composition selon l'une quelconque des revendications précédentes, dans laquelle la matière grasse de durcissement en plus de la matière grasse de lait comprend de la matière grasse choisie dans le groupe constitué de : fractions moyennes d'huile de palme, fractions molles d'huile de palme ou une combinaison de celles-ci.

6. Composition selon l'une quelconque des revendications précédentes, dans laquelle l'huile liquide est choisie dans le groupe constitué de : huile de colza, huile de tournesol, huile de carthame, huile de soja, huile d'algues, huile de palme, huile d'arachide, huile d'olive, huile de noix de macadamia, huile de moringa, huile de graines, huile de noisette, huile d'avocat ou une combinaison de celles-ci, de préférence l'huile liquide n'est pas une huile à haute teneur en acide oléique.

7. Composition selon l'une quelconque des revendications précédentes, dans laquelle les matières solides non grasses sont choisies dans le groupe constitué de : sucre, fibres, poudre de cacao, lait en poudre, émulsifiant, viande de noix et un ou plusieurs arômes.

8. Composition selon l'une quelconque des revendications précédentes, dans laquelle la composition comprend 0,1 % à 2 % en poids d'émulsifiants choisis parmi la lécithine de tournesol et la lécithine de soja, ou une combinaison de celles-ci.

9. Composition selon l'une quelconque des revendications précédentes, comprenant 1 à 20 % en poids de matière sèche lactique non grasse.

10. Composition selon l'une quelconque des revendications précédentes, dans laquelle les matières solides non grasses comprennent
25 à 45 % en poids de sucre,
0 à 15 % en poids de poudre de cacao, et
0 à 12 % en poids de matière sèche lactique non grasse.

11. Composition selon l'une quelconque des revendications précédentes, dans laquelle la composition comprend l'agent structurant choisi dans le groupe constitué de stéarine de palme, cire ou une combinaison de celles-ci.

12. Composition selon l'une quelconque des revendications précédentes, dans laquelle la composition comprend moins de 3 % en poids de matière grasse laurique, de préférence moins de 2 % en poids, le plus préférablement la composition est exempte de matière grasse laurique.

13. Procédé de production d'une composition d'enrobage selon l'une quelconque des revendications précédentes, dans lequel ledit procédé comprend les étapes consistant à :
fournir les matières solides non grasses et la matière grasse de durcissement et l'huile liquide,
faire fondre la matière grasse de durcissement,
mélanger des matières solides non grasses avec l'au moins une partie de la matière grasse de durcissement fondue et
obtenir un mélange de matière grasse de durcissement et de matières solides non grasses,
raffiner le mélange de matière grasse de durcissement et de matières solides non grasses par broyage pour réduire les particules, de préférence jusqu'à une taille de particule inférieure à 40 microns,
ajouter l'huile liquide au mélange raffiné et
éventuellement ajouter un émulsifiant au mélange raffiné et/ou au mélange avec l'huile liquide.

14. Procédé de préparation d'une confiserie congelée au moins partiellement enrobée, le procédé comprenant la fourniture d'une composition d'enrobage selon l'une quelconque des revendications précédentes et l'enrobage d'une composition congelée.

15. Confiserie congelée au moins partiellement enrobée avec une composition selon l'une quelconque des revendications 1 à 12.
